# EUROPEAN PATENT SPECIFICATION

(11) **EP 4 011 954 B1**
(45) Date of publication and mention of the grant of the patent: **04.03.2026**
(21) Application number: 21814089.5
(22) Date of filing: 31.05.2021
(51) Int. Cl.: D21H 11/18, D21H 17/63, D21H 17/00, D21H 21/52, C08L 67/02, C08J 5/00, C08K 3/08, C08K 3/22, C08K 9/04, C08K 9/02, C08K 7/02, D21C 9/00, C08L 1/02

(54) **FIBRILLATED FIBER AND METHOD FOR PREPARING THE SAME**
FIBRILLIERTE FASER UND VERFAHREN ZU DEREN HERSTELLUNG
FIBRE FIBRILLÉE ET SON PROCÉDÉ DE PRÉPARATION

(30) Priority: 29.05.2020 KR 20200065204; 13.07.2020 KR 20200086346
(43) Date of publication of application: 15.06.2022
(73) Proprietor: LG Chem, Ltd., Seoul 07336 (KR)
(72) Inventor: PARK, Minsung, Daejeon 34122 (KR); LEE, Su Hee, Daejeon 34122 (KR); KANG, Nana, Daejeon 34122 (KR); JEON, Kwang Seoung, Daejeon 34122 (KR)
(74) Representative: Goddar, Heinz J.
(86) International application number: PCT/KR2021/006738
(87) International publication number: WO 2021/242067

(56) References cited:
- EP-A1- 2 236 545
- JP-A- 2012 532 952
- JP-A- 2014 088 478
- JP-A- 2019 099 687
- JP-A- 2019 119 983
- JP-A- H08 259 844
- SAHOO KARUNAKAR, NAYAK J.: "ZnO-cellulose nanocomposite powder for application in UV sensors", AIP CONFERENCE PROCEEDINGS, vol. 1832, 23 May 2017 (2017-05-23), NEW YORK, US , pages 050090, XP055871226, ISSN: 0094-243X, DOI: 10.1063/1.4980323

## Description

### [TECHNICAL FIELD]

The present disclosure relates to fibrillated fibers and a method for preparing the same.

### [BACKGROUND OF ART]

Cellulose is attracting attention as a polymer material with excellent mechanical properties and biodegradability. As part of this, research to provide an eco-friendly complex by complexing cellulose and plastics is in the spotlight.

However, in order to complex cellulose with plastics, complex and expensive pretreatment processes such as a solvent replacement process for changing the solvent of cellulose extract from water to an organic solvent and a modification process for imparting lipophilicity to highly hydrophilic cellulose are required.

In order to simplify the process, attempts have been made to modify and miniaturize the cellulose by applying a physical force to the untreated pulp-state cellulose. However, since the cellulose is strongly connected by hydrogen bonds in its chemical structure, there is a limitation in miniaturizing the pulp-state cellulose only by the physical force. In addition, it is difficult to sufficiently modify the pulp-state cellulose.

In addition, methods for introducing inorganic particles or introducing a separate organic group to the surface of cellulose nanofibers in order to ensure compatibility with the polymer complex are known. However, since the surface-modified cellulose nanofibers are easily aggregated in the polymer complex, it is very difficult to disperse them in the nanoscale, and thus there is a limitation in obtaining a sufficient reinforcing effect.

Accordingly, there is still a need for a method capable of providing cellulose suitable for complexing with plastics in a more simplified process.

JP 2014 088 478 A describes that in a mixed system containing at least water, fibrillated cellulose, and a silicate-forming material, a silicate generated by a hydrothermal synthesis method is bonded to fibrillated cellulose. Further, a mixed system containing at least a cellulose raw material and a silicate-forming material is subjected to wet milling to fibrillate the cellulose raw material and in the mixed system, the silicate generated by the hydrothermal synthesis method is bonded to the fibrillated cellulose.

### [DETAILED DESCRIPTION OF THE INVENTION]

### [Technical Problem]

In the present disclosure, there is provided a method for preparing fibrillated fibers which can provide fibers suitable for complexing with plastics in a more simplified process.

In the present disclosure, there is also provided fibrillated fibers capable of exhibiting excellent dispersibility in the complex with plastics.

### [Technical Solution]

Hereinafter, the fibrillated fibers and the method for preparing the same according to embodiments of the present invention will be described.

Singular expressions of the present disclosure may include plural expressions unless they are differently expressed contextually.

The terms "include", "comprise", and the like of the present disclosure are used to specify certain features, regions, integers, steps, operations, elements, and/or components, and these do not exclude the existence or the addition of other certain features, regions, integers, steps, operations, elements, and/or components.

As used herein, 'nanofiber' or 'nanofibrils' refers to a fiber having a minor axis diameter in the nanometer range, and 'microfiber' refers to a fiber having a minor axis diameter in the micrometer range. For example, the microfiber may be composed of a bundle of the nanofibers.

As used herein, 'pulp' refers to a lignocellulosic fibrous material obtained by chemically or mechanically separating cellulose fibers from wood, fiber crops, waste paper, rags, or the like.

As used herein, 'pulp fiber', 'cellulose fiber' or 'microcellulose fiber' refers to a microfiber made of cellulose. As used herein, 'cellulose nanofiber' refers to a nanofiber made of cellulose.

As used herein, 'fibrillation' refers to a phenomenon in which nanofibrils forming the internal structure of cellulose fibers are released and raised like fluff on the cellulose fibers.

As used herein, 'fibrillated cellulose fiber' refers to a cellulose fiber in a state in which nanofibrils having a minor axis diameter in the nanometer range are raised like fluff on the cellulose fiber by the fibrillation.

### I. The method for preparing fibrillated fibers

According to an embodiment of the present disclosure, there is provided a method for preparing fibrillated fibers including the steps of:
preparing a mixture containing microfibers, a fine particle precursor, and a solvent;
fibrillating the microfibers by growing fine particles on the microfibers from the fine particle precursor; and
miniaturizing the microfibers by applying a shear force to the microfibers fibrillated by the growth of the fine particles, wherein the microfibers are cellulose fibers, wherein the fine particle precursor comprises an acetate, chloride, or nitrate of at least one metal selected from the group consisting of copper, zinc, calcium, aluminum, iron, platinum, palladium, ruthenium, iridium, rhodium, osmium, chromium, cobalt, nickel, manganese, vanadium, molybdenum, and gallium; or a silicon oxide precursor, wherein the fine particles grown on the microfibers from the fine particle precursor have a minor axis diameter of 0.01 *µ*m to 10 *µ*m as measured using a scanning electron microscope, and wherein the step of fibrillating the microfibers is performed by growing fine particles on the microfibers from the fine particle precursor by adding a reducing agent, a catalyst, a ligand or a mixture thereof to the mixture.

First, a step of preparing a mixture containing microfibers, a fine particle precursor and a solvent is performed.

The preparation method according to the embodiment may provide fibrillated fibers from various microfibers. The microfibers may be microfiber aggregates in the form of pulp extracted from raw materials, microfibers obtained by dispersing microfiber aggregates in a solvent, followed by defibration, or a mixture thereof. However, the above preparation method can provide fibrillated fibers by simply and efficiently miniaturizing microfibers. Therefore, when using the microfiber aggregates in the form of pulp as the microfibers, it is possible to effectively reduce the total energy required for preparing fibrillated fibers from raw materials. Preferably, the microfibers may be fiber aggregates composed of a plurality of fibrils.

Meanwhile, cellulose fibers are biodegradable and eco-friendly natural polymer materials. However, it is known that it is complex and difficult to miniaturize the cellulose fibers due to their high hydrophilicity. However, according to the preparation method of the embodiment, the cellulose fibers can be easily miniaturized, and can be easily modified, if necessary.

When the microfibers are cellulose fibers, the microfibers may be natural cellulose fibers obtained from wood such as softwoods or hardwoods; natural cellulose fibers obtained from non-wood such as bacteria and sea squirts; regenerated cellulose fibers represented by rayon fibers and cupro fibers; or a mixture thereof.

For example, the microfibers may be pulp fibers obtained by dissolving components other than cellulose from natural raw materials such as softwoods or hardwoods using caustic soda or sodium sulfate.

In the preparation method according to the embodiment, it is possible to provide fibrillated fibers having various physical properties depending on the type of fine particles grown on the microfibers.

That is, the fine particle precursor may be appropriately selected according to physical properties to be imparted to the fibrillated fibers. For example, for the purpose of imparting antibacterial property to fibrillated fibers, a fine particle precursor capable of growing zinc oxide may be selected.

The fine particle precursor is a salt of at least one metal selected from the group consisting of copper, zinc, calcium, aluminum, iron, platinum, palladium, ruthenium, iridium, rhodium, osmium, chromium, cobalt, nickel, manganese, vanadium, molybdenum, and gallium; or a silicon oxide precursor such as tetraethyl orthosilicate (TEOS). The salt of the metal is an acetate, chloride, or nitrate.

The fine particle precursor may be one type or two or more types.

The fine particle precursor may be contained in the mixture in an amount of 10 parts by weight or more, 20 parts by weight or more, or 40 parts by weight or more; and 150 parts by weight or less, 120 parts by weight or less, or 100 parts by weight or less based on 100 parts by weight of the microfibers. Preferably, the fine particle precursor may be contained in the mixture in an amount of 10 parts by weight to 150 parts by weight, 20 parts by weight to 150 parts by weight, 20 parts by weight to 120 parts by weight, 40 parts by weight to 120 parts by weight, or 40 parts by weight to 100 parts by weight. Within this range, sufficient fibrillation can be induced by uniformly distributing the fine particle precursor to the microfibers.

An appropriate solvent capable of dissolving the fine particle precursor and swelling the microfibers may be used as the solvent. For example, water, alcohol (e.g., lower alcohol such as methanol, ethanol, propanol or butanol), dimethyl sulfoxide (DMSO), sodium hydroxide solution, ammonia solution, urea solution, or a mixture thereof may be used.

The solvent may be used in an amount of 1000 parts by weight to 10000 parts by weight based on 100 parts by weight of the microfibers. Within this range, the microfibers are sufficiently swollen, and fluidity of the fine particle precursor is ensured, so that the fine particle precursor can be uniformly dispersed on the microfibers.

In the step of preparing the mixture, microfibers may be added after dissolving the fine particle precursor in a solvent. Then, the obtained mixture is stirred to swell **the microfibers,** and at the same time, the fine particle precursor is evenly distributed on the swollen microfibers and can be attached through hydrogen bonding or ionic bonding.

Meanwhile, according to the present disclosure, a step of fibrillating the microfibers by growing fine particles on the microfibers from the fine particle precursor is performed.

**In** general, fibrillation of cellulose fibers means a phenomenon in which relatively large fibrils forming a membrane of cellulose fibers and their internal tissues are released through a process such as beating, and fine fibrils are formed on the surface like fluff.

In the present disclosure, the microfibers fibrillated by the growth of the fine particles may be a fiber in which some of the fibrils forming the microfibers are released by the growth of the fine particles to form nanofibrils on the microfibers.

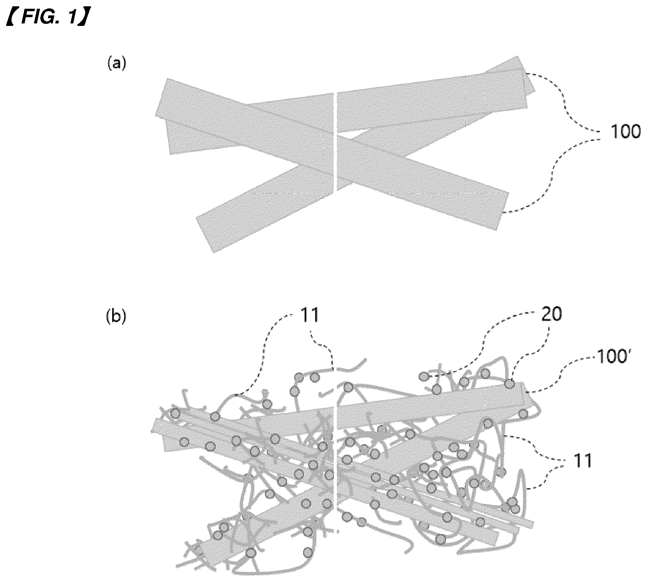

FIG. 1 is an enlarged schematic view of (a) microfibers and (b) fibrillated fibers according to an embodiment of the present invention.

In FIG. 1 (a), the microfiber 100 is a fiber having a minor axis diameter in the micrometer range. Referring to FIG. 1 (b), when fine particles are grown on the microfibers by the fibrillation step, some of the fibrils forming the microfibers 100 are released by the growth of the fine particles 20, thereby forming a fiber in which nanofibrils 11 are raised on the microfibers 100' like fluff. Also, the nanofibrils 11 may be present inside the microfibers 100' through fibrillation by the growth of the fine particles 20.

Preferably, in the microfibers fibrillated by the growth of the fine particles, the microfibers may have a minor axis diameter of 1 *µ*m or more; and 30 *µ*m or less, 25 *µ*m or less, 20 *µ*m or less, 15 *µ*m or less, or 10 *µ*m or less. Specifically, the microfibers may have a minor axis diameter of 1 *µ*m to 30 *µ*m, 1 *µ*m to 25 *µ*m, 1 *µ*m to 20 *µ*m, 1 *µ*m to 15 *µ*m, or 1 *µ*m to 10 *µ*m.

And, in the microfibers fibrillated by the growth of the fine particles, the nanofibrils may have a minor axis diameter of 10 nm or more, 20 nm or more, 30 nm or more, 50 nm or more, or 50 nm or more; and 400 nm or less, 350 nm or less, 300 nm or less, 250 nm or less, 200 nm or less, 150 nm or less, or 100 nm or less. Specifically, the nanofibrils may have a minor axis diameter of 10 nm to 400 nm, 10 nm to 350 nm, 10 nm to 300 nm, 20 nm to 300 nm, 20 nm to 250 nm, 30 nm to 250 nm, 30 nm to 200 nm, 40 nm to 200 nm, 40 nm to 150 nm, 50 nm to 150 nm, or 50 nm to 100 nm.

For example, the microfibers fibrillated by the growth of the fine particles may include microcellulose fibers including nanofibrils and fine particles.

Herein, the nanofibrils may be bonded to a surface of the microcellulose fibers. In addition, the nanofibrils may be present inside the microcellulose fibers. In addition, the fine particles may be bonded to the nanofibrils or bonded to a surface or inside of the microcellulose fibers.

In the step of fibrillating the microfibers, a reducing agent, a catalyst, a ligand or a mixture thereof is added to the mixture to grow fine particles on the microfibers from the fine particle precursor.

Herein, the type and content of the reducing agent, catalyst, and ligand may be appropriately selected according to the added fine particle precursor, and the type and content of the fine particles to be grown. For example, the reducing agent may be sodium hydroxide (NaOH), a metal hydride-based reducing agent, a borohydride-based reducing agent, a borane-based reducing agent, a silane-based reducing agent, a hydrazine-based reducing agent, or a hydrazide-based reducing agent. As the catalyst, ammonia or urea may be used. As the ligand, benzene-1,3,5-tricarboxylate (BTC) may be used.

In the step of fibrillating the microfibers, the fine particles grown on the microfibers from the fine particle precursor have a minor axis diameter of 0.01 *µ*m to 10 µm, preferably 0.03 *µ*m or more, or 0.05 *µ*m or more; and 7 *µ*m or less, or 5 *µ*m or less. Preferably, the fine particles may have a minor axis diameter of 0.03 *µ*m to 7 *µ*m, or 0.05 *µ*m to 5 *µ*m.

The fibrillated microfibers can be easily miniaturized with little energy through a subsequent miniaturizing process, thereby efficiently providing fibrillated fibers. However, when the size of the fine particles on the fibrillated microfibers is too large, the fine particles may act as defects, thereby reducing mechanical properties of the complex including the fibrillated fiber.

The fine particles may be spherical fine particles having a diameter of 0.01 *µ*m to 10 *µ*m. In addition, the fine particles may be columnar fine particles having a diameter of 0.01 *µ*m to 10 *µ*m on one axis and a diameter of 0.01 *µ*m to 10 *µ*m on another axis. The diameter of the fine particles may be measured using a scanning electron microscope. As a non-limiting example, the diameters, minor axis diameters, or major axis diameters of 20 fine particles are measured using a scanning electron microscope, respectively, and then an average value calculated by excluding the maximum and minimum values is obtained.

Optionally, after growing the fine particles on the microfibers, a step of modifying the fine particles may be performed.

For example, a process of modifying the fine particles by adding a lipophilic compound having a thiol group after growing the fine particles on the microfibers may be additionally performed. By modifying the fine particles to be lipophilic, compatibility between the fibrillated microfibers and the organic material may be further improved. Examples of the lipophilic compound having a thiol group include 1-decanethiol, 1-undecanethiol, 1-dodecanethiol, 1-tetradecanethiol, 1-pentadecanethiol, 1-hexadecanethiol, 1-octadecanethiol, and the like.

Meanwhile, according to the present disclosure, a step of miniaturizing the microfibers by applying a shear force to the microfibers fibrillated by the growth of the fine particles is performed.

The fibrillated microfibers obtained through the fibrillation process may be manufactured into fibrillated fibers through the miniaturizing process.

In the miniaturizing process, a shear force is applied to the fibrillated microfibers as shown in FIG. 1 (b) to miniaturize the fibrillated microfibers. When the microfibers are fibrillated by growing fine particles on the microfibers before the miniaturizing process, the fibrillated fibers can be easily provided with little energy.

Specifically, in the miniaturizing process, a mechanical shear force may be applied to the fibrillated microfibers using a known kneader to miniaturize the microfibers. As a non-limiting example, the kneader includes an extruder (e.g., single-screw extruder or twin-screw extruder), a ball mill, a roll mill, a cutter mill, a planetary mill, a bead mill, a jet mill, an ultrasonic homogenizer, a Banbury mixer, a grinder, a pressure kneader, a double roll mill, and the like.

For example, when a mechanical shear force is applied through a twin-screw extruder in the miniaturizing process, the screw rotation speed may be controlled to 100 rpm to 500 rpm.

This miniaturizing process may provide fibrillated fibers.

### II. The fibrillated fiber

According to another embodiment of the present disclosure, there are provided fibrillated fibers including nanofibrils and fine particles.

The fibrillated fibers contain microcellulose fibers including nanofibrils and fine particles. Herein, the nanofibrils may be bonded to a surface of the microcellulose fibers, and the fine particles may be bonded to the nanofibrils or bonded to a surface or inside of the microcellulose fibers.

FIG. 1 (b) is an enlarged schematic view of fibrillated fibers according to an embodiment of the present invention. Referring to FIG. 1 (b), in the fibrillated fibers, nanofibrils 11 are bonded to a surface of the microcellulose fibers 100 like fluff, and the fine particles 20 may be bonded to the nanofibrils 11 or bonded to a surface or inside of the microcellulose fibers 100.

Preferably, in the microcellulose fibers including nanofibrils and fine particles, the microfibers may have a minor axis diameter of 1 *µ*m or more; and 30 *µ*m or less, 25 *µ*m or less, 20 *µ*m or less, 15 *µ*m or less, or 10 *µ*m or less. Specifically, the microfibers may have a minor axis diameter of 1 *µ*m to 30 *µ*m, 1 *µ*m to 25 *µ*m, 1 *µ*m to 20 *µ*m, 1 *µ*m to 15 *µ*m, or 1 *µ*m to 10 *µ*m.

And, in the microfibers fibrillated by the growth of the fine particles, the nanofibrils may have a minor axis diameter of 10 nm or more, 20 nm or more, 30 nm or more, 50 nm or more, or 50 nm or more; and 400 nm or less, 350 nm or less, 300 nm or less, 250 nm or less, 200 nm or less, 150 nm or less, or 100 nm or less. Specifically, the nanofibrils may have a minor axis diameter of 10 nm to 400 nm, 10 nm to 350 nm, 10 nm to 300 nm, 20 nm to 300 nm, 20 nm to 250 nm, 30 nm to 250 nm, 30 nm to 200 nm, 40 nm to 200 nm, 40 nm to 150 nm, 50 nm to 150 nm, or 50 nm to 100 nm.

The fine particles have a minor axis diameter of 0.01 *µ*m to 10 *µ*m, preferably 0.03 *µ*m or more, or 0.05 *µ*m or more; and 7 *µ*m or less, or 5 *µ*m or less. Preferably, the fine particles may have a minor axis diameter of 0.03 *µ*m to 7 *µ*m, or 0.05 *µ*m to 5 *µ*m.

The fine particles may be spherical fine particles having a diameter of 0.01 *µ*m to 10 *µ*m. In addition, the fine particles may be columnar fine particles having a diameter of 0.01 *µ*m to 10 *µ*m on one axis and a diameter of 0.01 *µ*m to 10 *µ*m on another axis.

According to an embodiment of the present disclosure, the fine particles may be included in an amount of 1 part by weight or more, 5 parts by weight or more, 8 parts by weight or more, or 10 parts by weight or more; and 30 parts by weight or less, 25 parts by weight or less, or 20 parts by weight or less based on 100 parts by weight of the microcellulose fibers. Preferably, the fine particles may be included in an amount of 1 to 30 parts by weight, 5 to 30 parts by weight, 5 to 25 parts by weight, 8 to 25 parts by weight, 10 to 25 parts by weight, or 10 to 20 parts by weight based on 100 parts by weight of the microcellulose fibers.

In order to sufficiently express the fibrillation effect of the microcellulose fibers by the growth of fine particles, the fine particles are preferably included in an amount of 1 part by weight or more, 5 parts by weight or more, or 10 parts by weight or more based on 100 parts by weight of the microcellulose fibers.

However, when the fine particles are included in an excessive amount on the microcellulose fibers, compatibility with the polymer matrix may be reduced, and thus mechanical properties of the polymer complex may be deteriorated. In addition, when the fine particles are included in an excessive amount, the fine particles are aggregated to form a non-uniform aggregate, and thus various physical properties may be deteriorated. Therefore, the fine particles are preferably included in an amount of 30 parts by weight or less, 25 parts by weight or less, or 20 parts by weight or less based on 100 parts by weight of the microcellulose fibers.

The fibrillated fibers are obtained according to the above-described 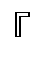 I. The method for preparing fibrillated fibers 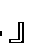 .

### [ADVANTAGEOUS EFFECTS]

There is provided a preparation method capable of providing fibers suitable for complexing with plastics in a more simplified process. According to the preparation method of the present disclosure, microfibers can be easily miniaturized with little energy by growing fine particles on the microfibers to fibrillate the microfibers, and then applying a shear force thereto, and various physical properties can be expressed from the grown fine particles.

### [BRIEF DESCRIPTION OF THE DRAWINGS]

FIG. 1 is an enlarged schematic view of (a) microfibers and (b) fibrillated fibers according to an embodiment of the present invention.
FIG. 2 is a scanning electron microscope (SEM) image of pulp fibers used in Example 1.
FIG. 3 is a SEM image of fibrillated fibers obtained in Example 1.
FIG. 4 is a SEM image of fibrillated fibers obtained in Example 2.
FIG. 5 is a SEM image of fibrillated fibers obtained in Example 3.
FIG. 6 shows a comparison of SEM images of (a) fibrillated fibers according to Example 2 and (b) miniaturized cellulose complexed with fine particles according to Comparative Example 2.
FIG. 7 is a comparison of SEM images of FIG. 6 (a) and (b) taken at a higher magnification.

### <Description of symbols>

100, 100': microfiber
11: nanofibril
20: fine particle

### [DETAILED DESCRIPTION OF THE EMBODIMENTS]

Hereinafter, the function and effect of the present invention will be described in more detail through specific examples. However, these examples are for illustrative purposes only, and the invention is not intended to be limited by these examples.

### Example 1

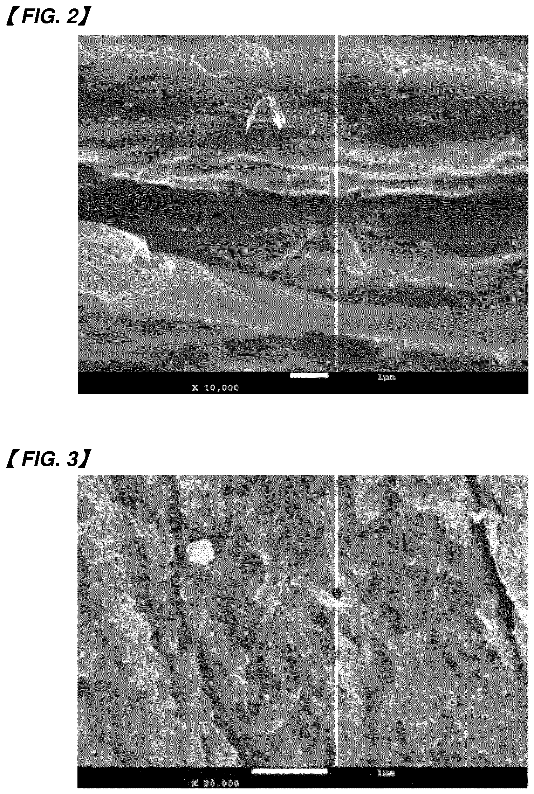

Softwood kraft pulp fibers were prepared as cellulose raw materials. Then, the shape of the pulp fibers was observed using a scanning electron microscope (SEM image of FIG. 2).

20 g of the above pulp fibers (microfibers) were added to 1 L of a 0.05 M aqueous solution in which 9.08 g (0.05 mol) of copper acetate was dissolved in distilled water, and stirred at 500 rpm for 2 hours to prepare a mixture. In this mixture, copper acetate was attached to the swollen pulp fibers through hydrogen bonding or ionic bonding.

0.05 mol of benzene-1,3,5-tricarboxylate (BTC) was added to the mixture at room temperature, and stirred at 500 rpm for 2 hours to grow fine particles on the pulp fibers. As shown in FIG. 3, FIG. 6 (a), and FIG. 7 (a), it was confirmed using a scanning electron microscope that fibrillation occurred in the pulp fiber portion on which particles (HKUST-1: Cu-BTC) were grown.

Thereafter, the fibrillated pulp fibers were introduced into a twin-screw extruder (BAutek, BA-11), and then extruded to obtain fibrillated fibers. At this time, a screw diameter of the twin-screw extruder was adjusted to 11 mm, L/D (ratio of screw diameter D and kneading block length L) was adjusted to 40, and a screw rotation speed was adjusted to 200 rpm.

### Example 2

20 g of the same pulp fibers as in Example 1 were added to an aqueous solution in which 20 g of zinc acetate was dissolved in 1000 g of distilled water, and stirred at 500 rpm for 2 hours to prepare a mixture. In this mixture, zinc acetate was attached to the swollen pulp fibers through hydrogen bonding or ionic bonding.

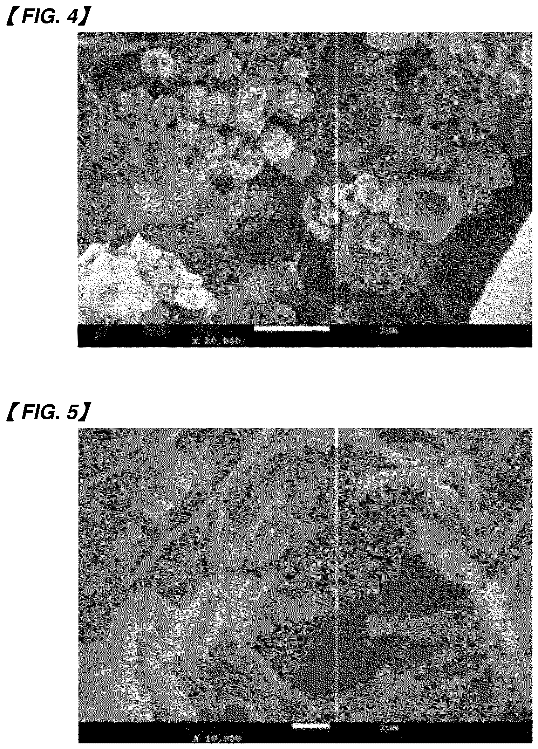

3.6 g of sodium hydroxide (NaOH) was added to the mixture at room temperature, and stirred at 500 rpm for 2 hours to grow fine particles on the pulp fibers. As shown in FIG. 4, it was confirmed using a scanning electron microscope that fibrillation occurred in the pulp fiber portion on which particles (ZnO) were grown.

Thereafter, a shear force was applied to the fibrillated pulp fibers in the same manner as in Example 1 to obtain fibrillated fibers by miniaturization.

### Example 3

20 g of the same pulp fibers as in Example 1 were added to an aqueous solution in which 10 g of tetraethyl orthosilicate (TEOS) was dissolved in a mixed solvent of 200 g of distilled water and 800 g of ethanol, and stirred at 500 rpm for 2 hours to prepare a mixture. In this mixture, tetraethyl orthosilicate was attached to the swollen pulp fibers through hydrogen bonding or ionic bonding.

1000 g of 1 wt% ammonia solution was added to the mixture as a catalyst at room temperature, and stirred at 500 rpm for 2 hours to grow fine particles on the pulp fibers. As shown in FIG. 5, it was confirmed using a scanning electron microscope that fibrillation occurred in the pulp fiber portion on which particles (SiO) were grown.

Thereafter, a shear force was applied to the fibrillated pulp fibers in the same manner as in Example 1 to obtain fibrillated fibers by miniaturization.

### Example 4

Fibrillated fibers were prepared in the same manner as in Example 2, except that 1 g of 1-octadecanethiol was added to the fibrillated pulp fibers to modify the pulp fibers to be lipophilic, and then a miniaturizing process was performed in Example 2.

### Comparative Example 1

The same softwood kraft pulp fibers as in Example 1 were prepared as cellulose raw materials. Cellulose fibers were prepared in the same manner as in Example 1, except that pulp fibers were extruded by putting them into a twin-screw extruder without growing fine particles on the pulp fibers.

### Comparative Example 2

The same softwood kraft pulp fibers as in Example 1 were prepared as cellulose raw materials. A surface of the pulp fibers was oxidized using 2,2,6,6-tetramethylpiperidinyl-1-oxyradical (TEMPO) as a catalyst to obtain oxidized pulp.

1 g of the oxidized pulp was dispersed in 99 g of distilled water and miniaturized (defibrated) with a mixer for 30 minutes to obtain an aqueous dispersion of miniaturized cellulose at a concentration of 1%.

A zinc acetate aqueous solution was prepared by dissolving 20 g of zinc acetate in 1000 g of distilled water. 3.6 g of sodium hydroxide (NaOH) was dissolved in 10 ml of distilled water to prepare a sodium hydroxide solution.

While stirring 100 g of the aqueous dispersion of miniaturized cellulose at 15 °C, 50 ml of the zinc acetate aqueous solution and 10 ml of the sodium hydroxide solution were added thereto, followed by stirring at 500 rpm for 2 hours to prepare a complex of zinc oxide (ZnO) particles and miniaturized cellulose.

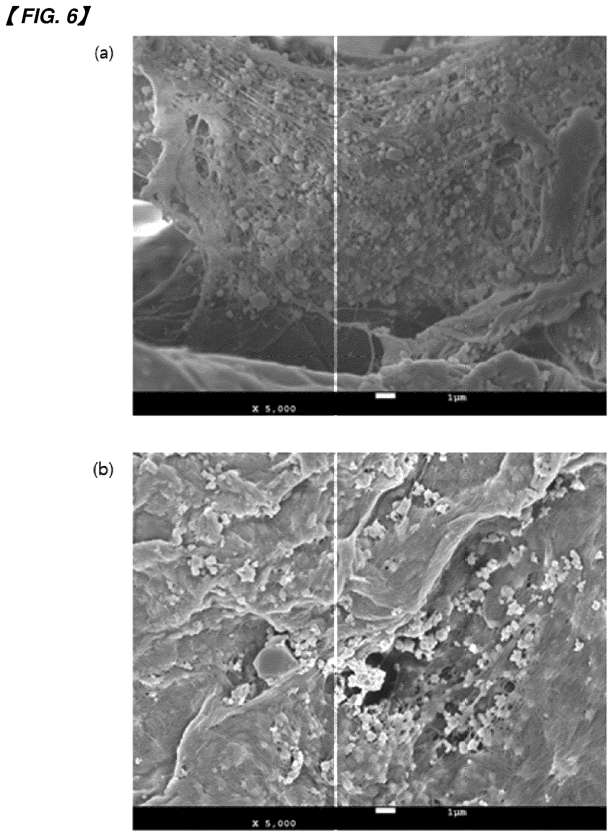

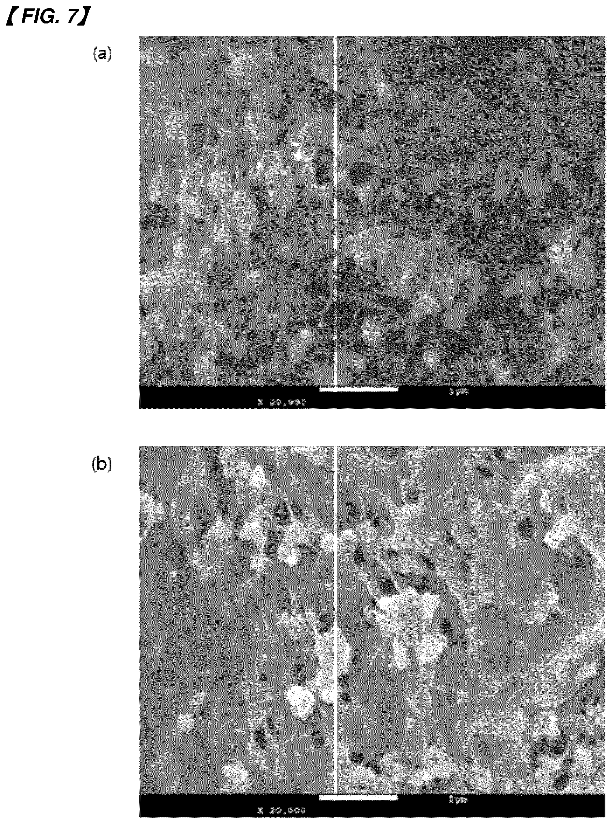

As shown in FIG. 6 (b) and FIG. 7 (b), it was confirmed using a scanning electron microscope that the complex of Comparative Example 2 had strong bonding strength and aggregation between the miniaturized celluloses, so that the miniaturized celluloses were aggregated and the dispersion of particles was low.

### Test Examples

The physical properties of the fibers prepared in Examples and Comparative Examples were evaluated by the following method, and the results are shown in Table 1 below.

### 1) Minor axis diameter of fiber

The minor axis diameter of the fiber (the shortest diameter in the cross section of fiber) was measured using a scanning electron microscope.

Specifically, in the case of fibrillated fibers, the minor axis diameters of 10 microfibers per each sample were measured and displayed in a range excluding the maximum and minimum values. In the case of nanofibrils, the minor axis diameters of 20 nanofibrils per each sample were measured, and displayed in a range excluding the maximum and minimum values.

However, since Comparative Example 1 did not undergo a fibrillation process unlike Examples, the minor axis diameter of the microfibers of Comparative Example 1 is the minor axis diameter of the non-fibrillated pulp fiber, and the minor axis diameter of the nanofibrils is the minor axis diameter of the nanofibers formed by the extrusion.

In addition, in Comparative Example 2, the pulp fibers were miniaturized (defibrated), and then complexed with particles unlike Examples. The minor axis diameter of nanofibrils of Comparative Example 2 in Table 1 below means the minor axis diameter of the miniaturized cellulose after complexing with particles.

### 2) Size of fine particles

The minor axis diameters of 20 fine particles per each sample were measured using a scanning electron microscope, and displayed in a range excluding the maximum and minimum values.

### 3) Antibacterial property

The antibacterial property was evaluated by modifying KS K 0693, an antibacterial test standard, to be suitable for evaluating the antibacterial property of fibers. Specifically, 4 mL of 10⁶ CFU bacteria (1X PBS 4 mL, 40 µL of bacteria with OD 600 nm = 1) was added to 0.4 g of a chopped sample in a 50 mL conical tube. A control specimen was prepared by adding 0.4 g of the fibers of Comparative Example 1. As a strain, Escherichia coli, gram-negative bacteria, was used. The prepared sample was suspension-cultured at 36 ± 1 °C for 24 hours using a shaking incubator. After the bacterial culture was completed, 16 mL of 1X PBS was added and diluted 5 times, followed by vortexing for 1 hour. After the vortexing was completed, 100 µL at a time was inoculated into agar solid medium. Then, it was smeared until absorbed into the medium using a spreader or glass beads. The solid medium was subjected to stationary culture at 36 ± 1 °C for 24 hours. The colonies of each Petri dish were counted and recorded. Then, the bacteriostatic rate was obtained by calculating how many percent the number of colonies of the antibacterial sample was reduced compared to the control specimen.

### 4) Deodorizing property

5 to 10 ppm of each of acetic acid, ammonia, acetaldehyde and formaldehyde gas was flowed into a glass tube containing 50 mg of the sample of Example 1 using a standard gas generator at a rate of 150 mL/min in a total of 10 L. Then, the gas concentration after passing through the sample was quantitatively analyzed in real time using a shift mass device (SYFT Technologies, VOICE200 ultra). And, the ratio of the gas removed by the sample of Example 1 to the gas supplied to the sample was calculated and shown in Table 2.

**[Table 1]**

| | Minor axis diameter | | Size of fine particles (*µ*m) | Antibacterial property (%) |
|---|---|---|---|---|
| | Microfibers (*µ*m) | Nanofibrils (nm) | | |
| Example 1 | 1 ~ 10 | 50 ~ 100 | 0.05 ~ 0.1 | 99.0 |
| Example 2 | 1 ~ 10 | 50 ~ 100 | 0.1 ~ 1 | 99.0 |
| Example 3 | 1 ~ 10 | 50 ~ 100 | 0.03 ~ 0.1 | - |
| Example 4 | 1 ~ 10 | 50 ~ 100 | 0.1 ~ 1 | 99.0 |
| Comparative Example 1 | 5 ~ 10 | 500 ~ 1000 | - | - |
| Comparative Example 2 | - | 10 ~ 100 | 0.1 ~ 1 | - |

**[Table 2]**

| Example 1 | Acetic Acid | Ammonia | Acetaldehyde | Formaldehyde |
|---|---|---|---|---|
| Gas removal (%) | 93 | 94 | 94 | 95 |

Referring to Table 1, it was confirmed in Examples 1 to 4 that pulp fibers could be further miniaturized even under the same shear force as in Comparative Example 1 by growing fine particles to fibrillate before applying a shear force to the pulp fibers, and at the same time, physical properties such as antibacterial property could be imparted.

In addition, referring to Table 2, it was confirmed that various physical properties such as deodorizing property could be additionally imparted depending on the type of fine particles grown on the pulp fibers as in Example 1.

In the case of Comparative Example 2, the short axis diameter of the miniaturized cellulose formed by miniaturization (defibration) was equal to or smaller than that of nanofibrils of Examples, but the bonding force and aggregation between miniaturized celluloses were strong, so that the miniaturized celluloses were aggregated and the dispersion degree of particles was low.

## Claims

1. A method for preparing fibrillated fibers comprising the steps of:
preparing a mixture containing microfibers, a fine particle precursor, and a solvent;
fibrillating the microfibers by growing fine particles on the microfibers from the fine particle precursor; and
miniaturizing the microfibers by applying a shear force to the microfibers fibrillated by the growth of the fine particles,
wherein the microfibers are cellulose fibers ,
wherein the fine particle precursor comprises an acetate, chloride, or nitrate of at least one metal selected from the group consisting of copper, zinc, calcium, aluminum, iron, platinum, palladium, ruthenium, iridium, rhodium, osmium, chromium, cobalt, nickel, manganese, vanadium, molybdenum, and gallium; or a silicon oxide precursor,
wherein the fine particles grown on the microfibers from the fine particle precursor have a minor axis diameter of 0.01 *µ*m to 10 *µ*m as measured using a scanning electron microscope, and
wherein the step of fibrillating the microfibers is performed by growing fine particles on the microfibers from the fine particle precursor by adding a reducing agent, a catalyst, a ligand or a mixture thereof to the mixture.

2. The method for preparing fibrillated fibers of Claim 1,
wherein the microfibers are microfiber aggregates in the form of pulp.

3. The method for preparing fibrillated fibers of Claim 1,
wherein the solvent is water, alcohol, dimethyl sulfoxide, sodium hydroxide solution, ammonia solution, urea solution, or a mixture thereof.

4. The method for preparing fibrillated fibers of Claim 1,
wherein the mixture contains 10 parts by weight to 150 parts by weight of the fine particle precursor and 1000 parts by weight to 10000 parts by weight of the solvent based on 100 parts by weight of the microfibers.

5. The method for preparing fibrillated fibers of Claim 1,
wherein the microfibers fibrillated by the growth of the fine particles contain microcellulose fibers comprising nanofibrils and fine particles.

6. The method for preparing fibrillated fibers of Claim 5,
wherein the nanofibrils are bonded to a surface of the microcellulose fibers, and
the fine particles are bonded to the nanofibrils or bonded to a surface or inside of the microcellulose fibers.

7. The method for preparing fibrillated fibers of Claim 5,
wherein the microcellulose fibers have a minor axis diameter of 1 *µ*m to 30 *µ*m, and
the nanofibrils have a minor axis diameter of 10 nm to 400 nm.

8. The method for preparing fibrillated fibers of Claim 1,
further comprising a step of modifying the fine particles by adding a lipophilic compound having a thiol group after growing the fine particles on the microfibers.

9. Fibrillated fibers comprising nanofibrils and fine particles obtained according to the method for preparing fibrillated fibers according to any of the preceding claims.

10. The fibrillated fibers of Claim 9,
wherein the nanofibrils are bonded to a surface of the microcellulose fibers, and
the fine particles are bonded to the nanofibrils or bonded to a surface or inside of the microcellulose fibers.

11. The fibrillated fibers of Claim 9,
wherein the microcellulose fibers have a minor axis diameter of 1 *µ*m to 30 *µ*m, and
the nanofibrils have a minor axis diameter of 10 nm to 400 nm.

## Patentansprüche

1. Verfahren zur Herstellung von fibrillierten Fasern, umfassend die Schritte:
Herstellen einer Mischung, die Mikrofasern, einen Feinpartikelvorläufer und ein Lösungsmittel enthält;
Fibrillieren der Mikrofasern durch Anwachsen von Feinpartikeln auf den Mikrofasern aus dem Feinpartikelvorläufer; und
Miniaturisieren der Mikrofasern durch Anwenden einer Scherkraft auf die durch das Anwachsen der Feinpartikel fibrillierten Mikrofasern,
wobei die Mikrofasern Cellulosefasern sind,
wobei der Feinpartikelvorläufer ein Acetat, Chlorid oder Nitrat von mindestens einem Metall, ausgewählt aus der Gruppe bestehend aus Kupfer, Zink, Calcium, Aluminium, Eisen, Platin, Palladium, Ruthenium, Iridium, Rhodium, Osmium, Chrom, Kobalt, Nickel, Mangan, Vanadium, Molybdän und Gallium; oder einen Siliciumoxidvorläufer umfasst,
wobei die auf den Mikrofasern aus dem Feinpartikelvorläufer angewachsenen Feinpartikel einen Nebenachsendurchmesser von 0,01 *µ*m bis 10 *µ*m, gemessen unter Verwendung eines Rasterelektronenmikroskops, aufweisen, und
wobei der Schritt des Fibrillierens der Mikrofasern durch Anwachsen von Feinpartikeln auf den Mikrofasern aus dem Feinpartikelvorläufer durch Zugeben eines Reduktionsmittels, eines Katalysators, eines Liganden oder einer Mischung davon zu der Mischung durchgeführt wird.

2. Verfahren zur Herstellung von fibrillierten Fasern nach Anspruch 1,
bei dem die Mikrofasern Mikrofaseraggregate in Form von Pulpe sind.

3. Verfahren zur Herstellung von fibrillierten Fasern nach Anspruch 1,
bei dem das Lösungsmittel Wasser, Alkohol, Dimethylsulfoxid, Natriumhydroxidlösung, Ammoniaklösung, Harnstofflösung oder eine Mischung davon ist.

4. Verfahren zur Herstellung von fibrillierten Fasern nach Anspruch 1,
bei dem die Mischung 10 Gewichtsteile bis 150 Gewichtsteile des Feinpartikelvorläufers und 1000 Gewichtsteile bis 10000 Gewichtsteile des Lösungsmittels, bezogen auf 100 Gewichtsteile der Mikrofasern, enthält.

5. Verfahren zur Herstellung von fibrillierten Fasern nach Anspruch 1,
bei dem die durch das Anwachsen der Feinpartikel fibrillierten Mikrofasern Mikrocellulosefasern enthalten, die Nanofibrillen und Feinpartikel umfassen.

6. Verfahren zur Herstellung von fibrillierten Fasern nach Anspruch 5,
bei dem die Nanofibrillen an eine Oberfläche der Mikrocellulosefasern gebunden sind, und
die Feinpartikel an die Nanofibrillen gebunden sind oder an eine Oberfläche oder Innenseite der Mikrocellulosefasern gebunden sind.

7. Verfahren zur Herstellung von fibrillierten Fasern nach Anspruch 5,
bei dem die Mikrocellulosefasern einen Nebenachsendurchmesser von 1 *µ*m bis 30 *µ*m aufweisen, und
die Nanofibrillen einen Nebenachsendurchmesser von 10 nm bis 400 nm aufweisen.

8. Verfahren zur Herstellung von fibrillierten Fasern nach Anspruch 1,
ferner umfassend einen Schritt des Modifizierens der Feinpartikel durch Hinzufügen einer lipophilen Verbindung mit einer Thiolgruppe nach dem Anwachsen der Feinpartikel auf den Mikrofasern.

9. Fibrillierte Fasern, umfassend Nanofibrillen und Feinpartikel, die gemäß dem Verfahren zur Herstellung von fibrillierten Fasern nach einem der vorhergehenden Ansprüche erhalten werden.

10. Fibrillierte Fasern nach Anspruch 9,
bei denen die Nanofibrillen an eine Oberfläche der Mikrocellulosefasern gebunden sind, und
die Feinpartikel an die Nanofibrillen gebunden sind oder an eine Oberfläche oder Innenseite der Mikrocellulosefasern gebunden sind.

11. Fibrillierte Fasern nach Anspruch 9,
bei denen die Mikrocellulosefasern einen Nebenachsendurchmesser von 1 *µ*m bis 30 *µ*m aufweisen, und
die Nanofibrillen einen Nebenachsendurchmesser von 10 nm bis 400 nm aufweisen.

## Revendications

1. Procédé de préparation de fibres fibrillées comprenant les étapes consistant à :
préparer un mélange contenant des microfibres, un précurseur de particules fines et un solvant ;
fibriller les microfibres par la croissance de particules fines sur les microfibres à partir du précurseur de particules fines ; et
miniaturiser les microfibres par l'application d'une force de cisaillement aux microfibres fibrillées par la croissance des particules fines,
dans lequel les microfibres sont des fibres de cellulose,
dans lequel le précurseur de particules fines comprend un acétate, chlorure ou nitrate d'un ou plusieurs métaux sélectionnés dans le groupe constitué du cuivre, zinc, calcium, aluminium, fer, platine, palladium, ruthénium, iridium, rhodium, osmium, chrome, cobalt, nickel, manganèse, vanadium, molybdène et gallium ; ou un précurseur d'oxyde de silicium,
dans lequel les particules fines qui ont crues sur les microfibres à partir du précurseur de particules fines ont un diamètre d'axe mineur de 0,01 *µ*m à 10 *µ*m, mesuré en utilisant un microscope électronique à balayage, et
dans lequel l'étape de fibrillation des microfibres est effectuée par la croissance de particules fines sur les microfibres à partir du précurseur de particules fines par l'ajout d'un agent de réduction, d'un catalyseur, d'un ligand ou d'un mélange de ces dernier au mélange.

2. Procédé de préparation de fibres fibrillées selon la revendication 1,
dans lequel les microfibres sont des agrégats de microfibres sous la forme de pulpe.

3. Procédé de préparation de fibres fibrillées selon la revendication 1,
dans lequel le solvant est de l'eau, un alcool, un sulfoxyde de diméthyle, une solution d'hydroxyde de sodium, une solution d'ammoniaque, une solution d'urée, ou un mélange de ces derniers.

4. Procédé de préparation de fibres fibrillées selon la revendication 1,
dans lequel le mélange contient 10 parties en poids à 150 parties en poids du précurseur de particules fines et 1000 parties en poids à 10 000 parties en poids du solvant sur la base de 100 parties en poids des microfibres.

5. Procédé de préparation de fibres fibrillées selon la revendication 1,
dans lequel les microfibres fibrillées par la croissance des particules fines contiennent des fibres de microcellulose comprenant des nanofibrilles et des particules fines.

6. Procédé de préparation de fibres fibrillées selon la revendication 5,
dans lequel les nanofibrilles sont liées à une surface des fibres de microcellulose, et
les particules fines sont liées aux nanofibrilles ou liées à une surface ou à l'intérieur des fibres de microcellulose.

7. Procédé de préparation de fibres fibrillées selon la revendication 5,
dans lequel les fibres de microcellulose ont un diamètre d'axe mineur de 1 *µ*m à 30 *µ*m, et
les nanofibrilles ont un diamètre d'axe mineur de 10 nm à 400 nm.

8. Procédé de préparation de fibres fibrillées selon la revendication 1,
comprenant en outre une étape de modification des particules fines par l'ajout d'un composé lipophile ayant un groupe thiol après la croissance des particules fines sur les microfibres.

9. Fibres fibrillées comprenant des nanofibrilles et des particules fines obtenues par le procédé de préparation de fibres fibrillées selon l'une quelconque des revendications précédentes.

10. Fibres fibrillées selon la revendication 9,
où les nanofibrilles sont liées à une surface des fibres de microcellulose, et
les particules fines sont liées aux nanofibrilles ou liées à une surface ou à l'intérieur des fibres de microcellulose.

11. Fibres fibrillées selon la revendication 9,
où les fibres de microcellulose ont un diamètre d'axe mineur de 1 *µ*m à 30 *µ*m, et
les nanofibrilles ont un diamètre d'axe mineur de 10 nm à 400 nm.
